# EUROPÄISCHE PATENTSCHRIFT

(11) **EP 0 587 981 B1**
(45) Veröffentlichungstag und Bekanntmachung des Hinweises auf die Patenterteilung: **28.08.1996**
(21) Anmeldenummer: 93106271.5
(22) Anmeldetag: 17.04.1993
(51) Int. Cl.: F01P 7/16, G05D 23/13

(54) **Thermostatventil**
Thermostatic valve
Soupape thermostatique

(30) Priorität: 12.09.1992 DE 4230571
(43) Veröffentlichungstag der Anmeldung: 23.03.1994
(73) Patentinhaber: Gustav Wahler GmbH u. Co, D-73730 Esslingen (DE)
(72) Erfinder: Wahler, Hans, W-7300 Esslingen (DE)
(74) Vertreter: Kratzsch, Volkhard, Dipl.-Ing.

(56) Entgegenhaltungen:
- DE-A- 1 938 097
- DE-C- 4 135 842
- FR-A- 2 136 535
- FR-A- 2 254 717
- FR-A- 2 510 707
- GB-A- 978 310

## Beschreibung

Die Erfindung bezieht sich auf ein Thermostatventil zur Regelung der Temperatur der Kühlflüssigkeit einer Brennkraftmaschine, insbesondere eines Kraftfahrzeugmotors, der im Oberbegriff des Anspruchs 1 genannten Art.

So ein Thermostatventil ist in der FR-A-2136535 gezeipt. Bei diesem Ventil ist das zweite Ventilverschlußglied mittelbar über Flügel am Gehäuse des Betätigungselements abgestützt und geführt.

Bei bekannten Thermostatventilen dieser Art (DE-OS 32 26 104) besteht die federelastische Rückstelleinrichtung aus zwei Federn. Die eine Feder ist dem ersten Ventilverschlußglied zugeordnet und mit einem Ende an diesem Ventilverschlußglied und mit ihrem anderen Ende z.B. am Ventilgehäuse abgestützt. Die zweite Feder ist dem zweiten Ventilverschlußglied zugeordnet und auf dem Gehäuse des temperaturabhängig arbeitenden Betätigungselements angeordnet, wobei diese Feder mit ihrem unteren Ende am zweiten Ventilverschlußglied abgestützt ist und mit ihrem gegenüberliegenden Ende am Gehäuse des Betätigungselementes. Das zweite Ventilverschlußglied wird von der diesem zugeordneten Feder gegen einen Endanschlag des Gehäuses des Betätigungselementes gedrückt und ist relativ zum Gehäuse des Betätigungselementes gegen die Wirkung der ihm zugeordneten Feder verschiebbar, um dann, wenn das zweite Ventilverschlußglied in Schließstellung steht und das Gehäuse des Betätigungselements relativ zum örtlich fest abgestützten Kolben noch weiter ausgeschoben wird, eine entsprechende Überhubbewegung des Gehäuses aufnehmen zu können.

Ein so gestaltetes Thermostatventil ist aufgrund dieser Gestaltung der federelastischen Rückstelleinrichtung aufwendig und teuer. Es sind zwei Federn notwendig. Ferner muß das zweite Ventilverschlußglied auf dem Gehäuse des Betätigungselements verschiebbar gelagert werden und endseitig durch einen Endanschlag gegen Herabdrücken vom Gehäuse des Betätigungselements gesichert werden. Auch dies ist aufwendig.

Der Erfindung liegt die Aufgabe zugrunde, ein Thermostatventil der im Oberbegriff des Anspruchs 1 genannten Art so auszubilden, daß der Aufwand und die Kosten dafür reduziert sind.

Diese Aufgabe ist bei einem Thermostatventil nach der Gattung des Anspruchs 1 erfindungsgemäß durch die Merkmale im Kennzeichnungsteil des Anspruchs 1 gelöst.

Da somit für beide Ventilverschlußglieder nur ein einziges Rückstellglied vorgesehen ist, das beiden Ventilverschlußgliedern zugeordnet ist und beide im Rückstellsinn beaufschlagt, entfällt somit ein Rückstellglied, wodurch der Aufwand und die Kosten für das Thermostatventil reduziert sind. Auch wird dadurch die Montage des Thermostatventils je nach Gestaltung des Ventilgehäuses vereinfacht.

Weitere vorteilhafte Merkmale der Erfindung und Ausgestaltungen dazu ergeben sich aus den Ansprüchen 2 bis 7.

Weitere Einzelheiten und Vorteile der Erfindung ergeben sich aus der nachfolgenden Beschreibung.

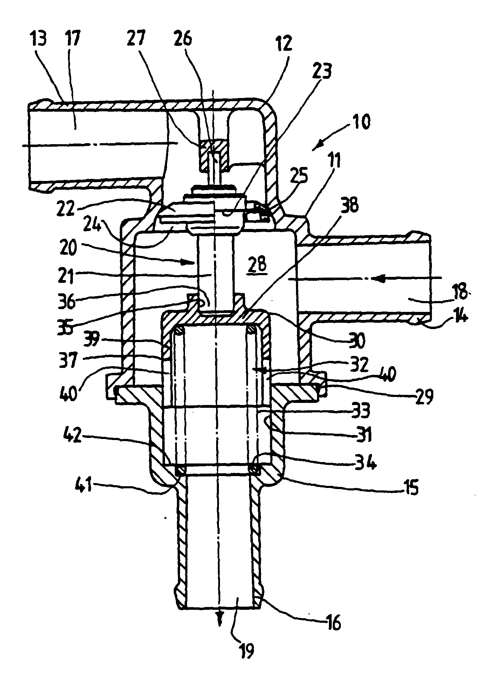

Die Erfindung ist nachfolgend anhand eines in der Zeichnung gezeigten Ausführungsbeispieles näher erläutert. Die Zeichnung zeigt einen schematischen Schnitt eines Thermostatventiles zur Regelung der Temperatur der Kühlflüssigkeit einer Brennkraftmaschine.

Das in der Zeichnung gezeigte Thermostatventil 10 dient zur Regelung der Temperatur der Kühlflüssigkeit einer nicht weiter gezeigten Brennkraftmaschine, insbesondere eines Kraftfahrzeugmotors. Es regelt den Kühlmittelfluß von der Brennkraftmaschine durch einen Bypaß und/oder durch einen Wärmeaustauscher zurück zur Brennkraftmaschine.

Das Thermostatventil 10 weist ein hier zweiteiliges Ventilgehäuse 11 auf, dessen oberer Gehäuseteil 12 zwei damit einstückige Stutzen 13, 14 und dessen unterer Gehäuseteil 15 einen Stutzen 16 aufweist. Jeder Stutzen 13, 14 und 16 bildet im Inneren einen Kanal 17 bzw. 18 bzw. 19 für die Kühlflüssigkeit. Die Kühlflüssigkeit wird z.B. über den Kanal 18 zugeführt und je nach Stellung des Thermostatventils 10 entweder über den Kanal 17 zu einem nicht gezeigten Wärmeaustauscher oder über den Kanal 19 und durch einen Bypaß zurück zur Brennkraftmaschine geführt. Es versteht sich, daß entsprechend den Gegebenheiten auch eine andere Führung der Kühlflüssigkeit im Rahmen der Erfindung liegt.

Das Thermostatventil 10 weist innerhalb des Ventilgehäuses 11 ein temperaturabhängig arbeitendes Betätigungselement 20 auf, dessen Gehäuse 21 einen sich bei Erwärmung ausdehnenden Dehnstoff enthält und ein erstes Ventilverschlußglied 22 trägt, das an einer Gehäuseschulter 23 in Öffnungsrichtung befestigt ist und hier als Ventilteller ausgebildet ist. Das erste Ventilverschlußglied 22 steuert eine Ventildurchflußöffnung 24 im Ventilgehäuse 11, die hier als angepaßter, etwa ringförmiger Ventilsitz 25 ausgebildet ist. In den Dehnstoff im Gehäuse 21 taucht ein dazu koaxialer Kolben 26 ein, der oben aus dem Gehäuse 21 herausgeführt und an einem Widerlager 27 axial abgestützt ist, das z.B. einstückiger Teil des Ventilgehäuses 11 ist.

Dehnt sich bei Temperaturerhöhung im Raum 28 der im Gehäuse 21 enthaltene Dehnstoff aus, wird aufgrund dieser Volumenzunahme das Gehäuse 21 relativ zum ortsfest abgestützten Kolben 26 in der Zeichnung nach unten verschoben unter Mitnahme des an der Gehäuseschulter 23 anliegenden ersten Ventilverschlußgliedes 22, das dadurch vom Ventilsitz 25 abhebt und die Ventildurchflußöffnung 24 für den Durchfluß der Kühlflüssigkeit vom Kanal 18 zum Kanal 17 hin freigibt, wobei die Kühlflüssigkeit außerdem mit einem Teilstrom noch vom Kanal 18 zum Kanal 19 fließen kann.

Der Kanal 19 wird von einem zweiten Ventilverschlußglied 30 gesteuert, das einer Ventildurchflußöffnung 31 zugeordnet ist und bei der Relativverschiebung über das Gehäuse 21 des Betätigungselements 20 verschiebbar ist.

Das Thermostatventil 10 ist mit einer federelastischen Rückstelleinrichtung 32 für die Ventilverschlußglieder 22 und 30 versehen. Diese Rückstelleinrichtung 32 weist ein einziges Rückstellglied 33 in Gestalt einer Feder auf, die insbesondere als zylindrische Schraubenfeder 34 ausgebildet ist und beiden Ventilverschlußgliedern 22 und 30 gemeinsam ist und beide im Rückstellsinn beaufschlagt.

Das einzige Rückstellglied 33 ist einerseits am Ventilgehäuse 11, und zwar insbesondere am unteren Gehäuseteil 15, und andererseits am zweiten Ventilverschlußglied 30 abgestützt. Dieses zweite Ventilverschlußglied 30 ist zumindest in Schließrichtung am Gehäuse 21 des Betätigungselements 20 abgestützt. Hierbei kann es vorteilhaft sein, wenn das zweite Ventilverschlußglied 30 am Gehäuse 21 des Betätigungselements 20 befestigt ist. Das zweite Ventilverschlußglied 30 enthält eine Bohrung 35, in die das Gehäuse 21 mit seinem zugewandten Ende 36 eingreift. Die Bohrung 35 ist als Sacklochbohrung ausgebildet.

Das zweite Ventilverschlußglied 30 ist als Schieber oder Ventilkolben 37 ausgebildet, insbesondere als Hohlkolben, der in der Zeichnung nach unten hin offen ist. Der Schieber oder Ventilkolben 37, insbesondere Hohlkolben, ist koaxial zur zugeordneten Ventildurchflußöffnung 31 angeordnet und in diese hinein eintauchbar bzw. aus dieser heraus bewegbar. Der Außendurchmesser des Schiebers oder Ventilkolbens 37 ist etwa so groß gewählt wie der Innendurchmesser der zugeordneten Ventildurchflußöffnung 31. Der Schieber oder Ventilkolben 37 ist dabei mit seinem Kolbenboden 38 dem Gehäuse 21 des Betätigungselements 20 zugewandt und daran abgestützt und mit seinem etwa zylindrischen Mantelteil 39 in die Ventildurchflußöffnung 31 eintauchbar.

In der in der Zeichnung gezeigten Position des Betätigungselements 20 ist das erste Ventilverschlußglied 22 in Schließstellung, so daß der Durchlaß zwischen den Kanälen 18 und 17 gesperrt ist. In dieser Stellung befindet sich das zweite Ventilverschlußglied 30 in einer Öffnungsstellung, in der der Durchlaß vom Kanal 18 zum Kanal 19 freigegeben ist. Der Schieber oder Ventilkolben 37 taucht zwar mit einem Endbereich seines Mantels 39 in die zugeordnete Ventildurchflußöffnung 31 ein. Jedoch weist der Mantelteil 39 in diesem dem Kolbenboden 38 abgewandten Endbereich mindestens einen Durchlaß 40 auf, über den der Kanal 18 mit dem Kanal 19 in Verbindung steht. Von Vorteil kann es sein, wenn der Mantelteil 39 mehrere, in Umfangsrichtung in Abstand voneinander angeordnete Durchlässe 40 aufweist, z.B. Schlitze, fensterartige Öffnungen od. dgl.

Das einzige Rückstellglied 33 in Form der insbesondere zylindrischen Schraubenfeder 34 ist mit seinem in der Zeichnung oberen Ende von unten her am Kolbenboden 38 des zweiten Ventilverschlußgliedes 30 abgestützt. Mit dem anderen, in der Zeichnung nach unten weisenden Ende ist das Rückstellglied 33 an einem Vorsprung 41, z.B. in Gestalt einer Ringschulter, des Ventilgehäuses 11 abgestützt. Der Vorsprung 41, insbesondere in Form der Ringschulter, folgt in axialem Abstand auf die Ventildurchflußöffnung 31, wobei der Abstand zweckmäßigerweise ausreichend groß bemessen ist, um beim Eintauchen des zweiten Ventilverschlußgliedes 30 in die Ventildurchflußöffnung 31 selbst bei einem aufzunehmenden Überhub einen ausreichenden Weg für das Zusammendrücken des Rückstellgliedes 33, insbesondere der Schraubenfeder 34, bereitzustellen. Das Rückstellglied 33 ist im Inneren des zweiten Ventilverschlußgliedes 30, insbesondere des Schiebers oder Ventilkolbens 37, enthalten und wird bedarfsweise durch den Mantelteil 39 zentriert und geführt. Nach unten hin steht das Rückstellglied 33 aus dem Schieber oder Ventilkolben 37 zum Vorsprung 41 hin vor.

Beim gezeigten Ausführungsbeispiel sind die beiden Gehäuseteile 12 und 15 zusammengesetzt und z.B. mittels Schweißen fest miteinander verbunden, wobei die Schweißverbindung bei 29 angedeutet ist und z.B. aus einer Hochfrequenzschweißnaht besteht. Bei einem anderen, nicht gezeigten Ausführungsbeispiel ist das Ventilgehäuse 11 einteilig oder an anderer Stelle geteilt, um einen Einbau des Betätigungselements 20 in das Ventilgehäuse 11 zu ermöglichen. Vielfältige Gestaltungsformen des Ventilgehäuses 11 liegen im Rahmen der Erfindung.

Im gezeigten Zustand des Thermostatventils 10 öffnet dessen zweites Ventilverschlußglied 30 den Durchlaß vom Kanal 18 zum Kanal 19, und zwar durch den Raum 28, durch die Durchlässe 40 im Mantelteil 39 und durch die Ventildurchflußöffnung 31 bis zum Kanal 19. Dehnt sich der Dehnstoff im Gehäuse 21 bei Temperaturerhöhung der Kühlflüssigkeit im Raum 28 aus, so wird das Gehäuse 21 in der Zeichnung nach unten verschoben. Zusammen mit der Verschiebung des Gehäuses 21 wird das erste Ventilverschlußglied 22 und ferner das zweite Ventilverschlußglied 30 nach unten verschoben, und dies gegen das einzige Rückstellglied 33. Dabei wird das erste Ventilverschlußglied 22 in Öffnungsstellung gebracht, während das zweite Ventilverschlußglied 30 entsprechend der Verschiebung des Gehäuses 21 so weit in die Ventildurchflußöffnung 31 eintaucht, bis die Durchlässe 40 gänzlich darin verschwunden sind und der Mantelteil 39 mit seinem nicht durchbrochenen Bereich sich innerhalb der Ventildurchflußöffnung 31 befindet und somit diese dadurch verschlossen ist. In dieser Schließstellung des zweiten Ventilverschlußgliedes 30 befindet sich dessen unteres Ende noch in axialem Abstand von einer inneren Ringfläche 42 des Ventilgehäuses 11, so daß ausreichend Platz zu einer weiteren Verschiebung des Gehäuses 21 mit dem zweiten Ventilverschlußglied 30 nach unten zur Verfügung steht, um einen entsprechenden Überhub aufzunehmen, der ebenfalls gegen die Wirkung des einzigen Rückstellgliedes 33 möglich ist, das selbst bei maximalem Überhub noch nicht auf Block zusammengedrückt wird.

Sinkt die Temperatur der hindurchgeführten Kühlflüssigkeit ab, so kühlt der Dehnstoff im Gehäuse 21 unter Volumenabnahme ab. Das in Ventilöffnungsrichtung zusammengedrückte Rückstellglied 33, das das Gehäuse 21 in Schließrichtung beaufschlagt, verschiebt dann das Gehäuse 21 in der Zeichnung nach oben, wobei das erste Ventilverschlußglied 22 in Schließstellung gelangt und das zweite Ventilverschlußglied 30 in die dargestellte Öffnungsstellung.

Das Thermostatventil ist einfach und kostengünstig. Es benötigt als Rückstelleinrichtung für beide Ventilverschlußglieder 22 und 30 nur ein einziges Rückstellglied 33, z.B. in Form einer zylindrischen Schraubenfeder 34, wodurch die Anzahl der Bauteile und die Kosten und somit auch das Gewicht reduziert werden. Auch die Montage des Thermostatventils 10 ist dadurch wesentlich einfacher. Es ist lediglich notwendig, die Schraubenfeder 34 in den unteren Gehäuseteil 15 einzusetzen und in den oberen Gehäuseteil 12 das temperaturabhängig arbeitende Betätigungselement 20 komplett mitsamt dem zweiten Ventilverschlußglied 30 einzusetzen und sodann beide Gehäuseteil 12 und 15 zusammenzusetzen und miteinander fest zu verbinden, wobei diese Verbindung statt durch die Schweißverbindung 29 auch durch Schrauben, durch eine Bördelverbindung oder in sonstiger Weise hergestellt werden kann.

## Patentansprüche

1. Thermostatventil zur Regelung der Temperatur der Kühlflüssigkeit einer Brennkraftmaschine, insbesondere eines Kraftfahrzeugmotors, das den Kühlmittelfluß von der Brennkraftmaschine durch einen Bypaß und/oder durch einen Wärmeaustauscher zurück zur Brennkraftmaschine regelt, mit einem eine Ventildurchflußöffnung (24) aufweisenden Ventilgehäuse (11), einem temperaturabhängig arbeitenden Betätigungselement (20), bei dem ein in einem Gehäuse (21) eingeschlossener, sich bei Erwärmung ausdehnender Dehnstoff einen Kolben (26) verschiebt, mit einem die Ventildurchflußöffnung (24) beherrschenden, bei der Relativbewegung zwischen Gehäuse (21) und Kolben (26) verschiebbaren ersten Ventilverschlußglied (22), einem zweiten Ventilverschlußglied (30), das einer den Bypaß steuernden Ventildurchflußöffnung (31) zugeordnet ist und bei der Relativverschiebung über das Gehäuse (21) verschiebbar ist, und mit einer federelastischen Rückstelleinrichtung (32) für die Ventilverschlußglieder (22,30), die ein einziges, beiden Ventilverschlußgliedern (22,30) zugeordnetes und beide im Rückstellsinn beaufschlagendes Rückstellglied (33) aufweist, das mit seinem einen Ende am zweiten Ventilverschlußglied (30) abgestützt ist,
**dadurch gekennzeichnet,**
daß das zweite Ventilverschlußglied (30) zumindest in Schließrichtung unmittelbar am Gehäuse (21) des temperaturabhängig arbeitenden Betätigungselements (20) abgestützt und als Hohlkolben (37) ausgebildet ist, der in seiner öffnungsstellung mit einem Endbereich seines etwa zylindrischen Mantelteils (39) in die zugeordnete Ventildurchflußöffnung (31) eintaucht und im dem Kolbenboden (38) abgewandten Endbereich des Mantelteils (39) mindestens einen Durchlaß (40) aufweist, wobei der Ventilkolben (37) entsprechend der Verschiebung des Gehäuses (21) so weit in die Ventildurchflußöffnung (31) eintauchen kann, bis der Mantelteil (39) mit seinem nicht durchbrochenen Bereich sich innerhalb der Ventildurchflußöffnung (31) befindet und diese verschlossen ist.

2. Thermostatventil nach Anspruch 1,
**dadurch gekennzeichnet,**
daß das zweite Ventilverschlußglied (30) am Gehäuse (21) des temperaturabhängig arbeitenden Betätigungselements (20) befestigt ist.

3. Thermostatventil nach Anspruch 1 oder 2,
**dadurch gekennzeichnet**,
daß das zweite Ventilverschlußglied (30) eine Bohrung (35) enthält, in die das Gehäuse (21) des temperaturabhängig arbeitenden Betätigungselements (20) eingreift.

4. Thermostatventil nach Anspruch 3,
**dadurch gekennzeichnet**,
daß die Bohrung (35) als Sacklochbohrung ausgebildet ist.

5. Thermostatventil nach einem der Ansprüche 1 bis 4,
**dadurch gekennzeichnet**,
daß der Hohlkolben (37) mit seinem dem Gehäuse (21) des temperaturabhängig arbeitenden Betätigungselements (20) zugewandten Kolbenboden (38) am letzteren abgestützt ist.

6. Thermostatventil nach Anspruch 1,
**gekennzeichnet durch**
mehrere in Umfangsrichtung des Hohlkolbens (37) in Abständen voneinander angeordnete Durchlässe (40), z.B. Schlitze, oder fensterartige Öffnungen.

7. Thermostatventil nach einem der Ansprüche 1 bis 6,
**dadurch gekennzeichnet**,
daß das einzige Rückstellglied (33) mit seinem anderen Ende an einer Ringschulter des Ventilgehäuses (11) abgestützt ist, die in axialem Abstand auf die Ventildurchflußöffnung (31) folgt.

## Claims

1. Thermostatic valve for regulating the temperature of liquid coolant in an internal combustion engine, in particular a motor vehicle engine, which regulates the flow of coolant from the internal combustion engine through a bypass and/or through a heat exchanger and back to the internal combustion engine, with a valve housing (11) provided with a valve flow passage (24), a temperature-dependent operating element (20), wherein an expansion material, which expands on heating and is enclosed in a housing (21), displaces a piston (26), with a first valve closing member (22), which controls the valve flow passage (24) and may be displaced on relative movement between the housing (21) and the piston (26), with a second valve closing member (30), which is allocated to a valve flow passage (31) controlling the bypass and may be shifted on relative displacement via the housing (21), and with a resilient restoring means (32) for the valve closing members (22, 30), which has a single restoring element (33) allocated to both valve closing members (22, 30) and acting on both these members in restoring direction, said restoring element being supported at its one end on the second valve closing member (30), characterised in that the second valve closing member (30) is supported directly on the housing (21) of the temperature-dependent operating element (20), at least in the direction of closure, and is constructed as a hollow piston (37), which, in its open position, plunges into the allocated valve flow passage (31) at one end region of its approximately cylindrical shell portion (39) and has at least one passage (40) in the end region of its shell portion (39) facing away from the base of the piston (38), wherein in keeping with the displacement of the housing (21), the valve piston (37) can plunge into the valve flow passage (31) so far that in its region without a passage, the shell portion (39) is located inside the valve flow passage (31) and this flow passage is sealed.

2. Thermostatic valve according to Claim 1, characterised in that the second valve closing member (30) is fastened to the housing (21) of the temperature-dependent operating element (20).

3. Thermostatic valve according to Claim 1 or 2, characterised in that the second valve closing member (30) contains a hole (35), into which the housing (21) of the temperature-dependent operating element (20) engages.

4. Thermostatic valve according to Claim 3, characterised in that the hole (35) is constructed as a blind hole.

5. Thermostatic valve according to one of Claims 1 to 4, characterised in that the hollow piston (37) is supported on the housing (21) of the temperature-dependent operating element (20) at its piston base (38) facing said housing.

6. Thermostatic valve according to Claim 1, characterised by several passages (40), e.g. slots or window-like openings, spaced from one another in the peripheral direction of the hollow piston (37).

7. Thermostatic valve according to one of Claims 1 to 6, characterised in that the single restoring element (33) is supported at its other end on an annular shoulder of the valve housing (11) which follows the valve flow passage (31) at an axial distance.

## Revendications

1. Soupape thermostatique pour la régulation de la température du liquide de refroidissement d'un moteur à combustion interne, en particulier d'un moteur automobile, qui régule le flux de réfrigérant depuis le moteur à combustion interne à travers un bypass et/ou par un échangeur de chaleur jusqu'au retour au moteur à combustion interne, équipée d'une cage de soupape (11) présentant une ouverture de passage de soupape (24), d'un organe de commande (20) travaillant en fonction de la température, avec lequel un produit extensible enfermé dans un carter (21) et s'allongeant sous l'effet de la chaleur déplace un piston (26), d'un premier élément de fermeture de soupape (22) maîtrisant l'ouverture de passage de soupape (24) et pouvant coulisser lors du déplacement relatif entre le carter (21) et le piston (26), d'un deuxième élément de fermeture de soupape (30), qui est attribué à une ouverture de passage de soupape (31) commandant le bypass et peut coulisser lors du déplacement relatif par l'intermédiaire du carter (21), et d'un dispositif de rappel (32) avec flexibilité de ressort pour les éléments de fermeture de soupape (22, 30), qui présente un élément de rappel (33) unique, affecté aux deux éléments de fermeture de soupape (22, 30) et sollicitant les deux dans le sens de rappel, qui est appuyé avec une de ses extrémités sur le deuxième élément de fermeture de soupape (30), caractérisé en ce que le deuxième élément de fermeture de soupape (30) est appuyé au moins dans le sens de fermeture directement sur le carter (21) de l'organe de commande (20) travaillant en fonction de la température et est conçu comme un piston creux (37), qui plonge dans sa position de fermeture avec une zone d'extrémité de son enveloppe (39) à peu près cylindrique dans l'ouverture de passage de soupape (31) affectée et présente au moins un passage (40) dans la zone d'extrémité, opposée au fond du piston (38), de l'enveloppe (39), le piston creux (37) pouvant plonger en fonction du déplacement du carter (21) dans l'ouverture de passage de soupape (31) jusqu'à ce que l'enveloppe (39) se trouve avec sa zone non percée à l'intérieur de l'ouverture de passage de soupape (31) et que cette ouverture soit fermée.

2. Soupape thermostatique selon la revendication 1, caractérisée en ce que le deuxième élément de fermeture de soupape (30) est fixé sur le carter (21) de l'organe de commande (20) travaillant en fonction de la température.

3. Soupape thermostatique selon la revendication 1 ou 2, caractérisée en ce que le deuxième élément de fermeture de soupape (30) contient un alésage (35) dans lequel s'engrène le carter (21) de l'organe de commande (20) travaillant en fonction de la température.

4. Soupape thermostatique selon la revendication 3, caractérisée en ce que l'alésage (35) se présente sous la forme d'un alésage à trou borgne.

5. Soupape thermostatique selon l'une quelconque des revendications 1 à 4, caractérisée en ce que le piston creux (37) est appuyé avec son fond de piston (38), tourné vers le carter (21) de l'organe de commande (20) travaillant en fonction de la température, sur ce dernier.

6. Soupape thermostatique selon la revendication 1, caractérisée par plusieurs passages (40) disposés dans le sens périphérique du piston creux (37) et espacés les uns des autres, par exemple des fentes, ou des ouvertures en forme de fenêtre.

7. Soupape thermostatique selon l'une quelconque des revendications 1 à 6, caractérisée en ce que l'unique élément de rappel (33) est appuyé avec son autre extrémité sur un épaulement de bague de la cage de soupape (11), qui fait suite, à une distance axiale, à l'ouverture de passage de soupape (31).
